# EUROPÄISCHE PATENTANMELDUNG

(11) **EP 2 036 639 A1**
(43) Veröffentlichungstag der Anmeldung: **18.03.2009**
(21) Anmeldenummer: 08014323.3
(22) Anmeldetag: 12.08.2008
(51) Int. Cl.: B23B 31/28, B23Q 17/00, B23Q 3/16

(54) **Verfahren und Vorrichtung zum Fliehkraftausgleich bei einer Werkzeugmaschine mit einem Elektrospanner**

(30) Priorität: 17.09.2007 DE 102007044309
(71) Anmelder: Röhm GmbH, 89567 Sontheim (DE)
(72) Erfinder: Röhm, Georg, 89567 Sontheim (DE)
(74) Vertreter: Hentrich, Swen

(57) **Zusammenfassung**

Eine Werkzeugmaschine umfasst einen Elektrospanner 1, der ein an der Arbeitsspindel der Werkzeugmaschine befestigbares Gehäuse 2, in dem axial verstellbar eine Gewindestange 3 zur Einwirkung auf eine Verstellung der Spannbacken des Spannfutters gelagert ist, und einen elektrischen Stellmotor 4 aufweist. Dessen Rotor steht in Antriebsverbindung mit einem Antriebsrad. Das Antriebsrad 6 ist mit einem Wellengenerator 7 eines Gleitkeilgetriebes und ein Hohlrad 8 des Gleitkeilgetriebes ist mit dem Gehäuse 2 verbunden. Eine eine Außenverzahnung aufweisende Stahlbüchse 9 des Gleitkeilgetriebes ist als Antrieb für eine der Gewindestange 3 zugeordnete Spindelmutter vorgesehen. Weiterhin weist die Werkzeugmaschine eine Steuerung auf, die die Einwirkung über die Gewindestange 3 auf die Verstellung der Spannbacken in Abhängigkeit von der momentan gegebenen Drehzahl des Spannfutters ändert.

## Beschreibung

Die vorliegende Erfindung betrifft sowohl ein Verfahren zum Ausgleich der Fliehkraft bei einem Betrieb einer einen Elektrospanner aufweisenden Werkzeugmaschine als auch ein Bestimmungsverfahren einer Korrelationstabelle für das Verfahren zum Ausgleich der Fliehkraft als auch eine einen Elektrospanner aufweisende Werkzeugmaschine mit einer Steuerung zum Ausgleich der Fliehkraft.

Insbesondere betrifft die vorliegende Erfindung eine Werkzeugmaschine mit einem Elektrospanner, der ein an der Arbeitsspindel der Werkzeugmaschine befestigbares Gehäuse, in dem axial verstellbar eine Gewindestange zur Einwirkung auf eine Verstellung der Spannbacken des Spannfutters gelagert ist, und einen elektrischen Stellmotor aufweist, dessen Rotor in Antriebsverbindung mit einem Antriebsrad steht, wobei das Antriebsrad mit einem Wellengenerator eines Gleitkeilgetriebes (harmonic drive) und ein Hohlrad des Gleitkeilgetriebes mit dem Gehäuse verbunden ist und wobei eine eine Außenverzahnung aufweisende Stahlbüchse (Flexspline) des Gleitkeilgetriebes als Antrieb für eine der Gewindestange zugeordnete Spindelmutter vorgesehen ist.

Bei der Bearbeitung von Werkstücken mit herkömmlichen Werkzeugmaschinen tritt das Problem auf, dass der Einfluss der Fliehkraft mit steigender Drehzahl die momentan wirkende Spannkraft auf die Werkstücke verringert, weil dem Arbeitsdruck auf die Spannbacken die Fliehkraft des Spannfutters entgegenwirkt, die mit steigender Drehzahl ansteigt. Eine höhere Drehzahl ist für eine schnellere Bearbeitung der Werkstücke erwünscht, so dass das oben genannte Problem mit den stetig steigenden Anforderungen an Geschwindigkeit und Wirtschaftlichkeit der Bearbeitung der Werkstücke immer mehr an Bedeutung gewinnt.

Bei einem herkömmlichen Verfahren zur Sicherstellung einer ausreichenden Spannkraft bei höheren Drehzahlen wird bei einer herkömmlichen Werkzeugmaschine die Anfangsspannkraft so stark erhöht, dass auch bei höheren Drehzahlen die momentan wirkende Spannkraft für die Bearbeitung der Werkstücke ausreicht. Allerdings hat dieses herkömmliche Verfahren den Nachteil, dass je größer die Drehzahl bei der Bearbeitung ist, desto stärker die Anfangsspannkraft erhöht sein muss. Die erhöhte Anfangsspannkraft liegt sowohl am Anfang des Spannvorganges vor dem Rauffahren der Drehzahl als auch am Ende des Spannvorganges nach dem Runterfahren der Drehzahl an den Werkstücken an. Somit hat dieses Verfahren den Nachteil, dass Werkstücke aus deformationsempfindlichen Materialien durch die erhöhte Anfangsspannkraft am Anfang des Spannvorganges und / oder am Ende des Spannvorganges beschädigt werden.

Ein weiteres herkömmliches Verfahren zur Sicherstellung einer ausreichenden Spannkraft bei höheren Drehzahlen verwendet einen mechanischen Fliehkraftausgleich. Auf diese Weise wird der Nachteil einer erhöhten anfänglichen Spannkraft vermieden. Allerdings weist dieses Verfahren den Nachteil einer sogenannten Spannkrafthysterese auf. Die Spannkrafthysterese führt beim Abbremsen aus hoher Drehzahl zu einer deutlich höheren Spannkraft als zu Beginn des Spannvorganges. Somit weisen das Verfahren mit dem mechanischen Fliehkraftausgleich und die Werkzeugmaschine mit dem mechanischen Fliehkraftausgleich den Nachteil auf, dass Werkstücke aus deformationsempfindlichen Materialien am Ende des Spannvorganges beschädigt werden.

Der Erfindung liegt daher die Aufgabe zugrunde, sowohl ein Verfahren zum Ausgleich der Fliehkraft bei einem Betrieb einer einen Elektrospanner aufweisende Werkzeugmaschine mit hohen Drehzahlen als auch ein Bestimmungsverfahren einer Korrelationstabelle für das Verfahren zum Ausgleich der Fliehkraft als auch eine einen Elektrospanner aufweisende Werkzeugmaschine mit einer Steuerung gegen die Fliehkraft bei hohen Drehzahlen bereit zu stellen, die die oben genannten Nachteile überwinden.

Diese Aufgabe wird nach einem Gesichtspunkt der vorliegenden Erfindung bei einer Werkzeugmaschine der eingangs genannten Art durch eine Steuerung gelöst, die die Einwirkung über die Gewindestange auf die Verstellung der Spannbacken in Abhängigkeit von der momentan gegebenen Drehzahl des Spannfutters ändert.

Die Werkzeugmaschine nach der vorliegenden Erfindung weist einen Elektrospanner auf, der ein an der Arbeitsspindel der Werkzeugmaschine befestigbares Gehäuse, in dem axial verstellbar eine Gewindestange zur Einwirkung auf eine Verstellung der Spannbacken des Spannfutters gelagert ist, und einen elektrischen Stellmotor umfasst. Dessen Rotor steht in Antriebsverbindung mit einem Antriebsrad. Das Antriebsrad ist mit einem Wellengenerator eines Gleitkeilgetriebes verbunden und ein Hohlrad des Gleitkeilgetriebes ist mit dem Gehäuse verbunden. Eine eine Außenverzahnung aufweisende Stahlbüchse des Gleitkeilgetriebes ist als Antrieb für eine der Gewindestange zugeordnete Spindelmutter vorgesehen. Weiterhin weist die Werkzeugmaschine eine Steuerung auf, die die Einwirkung über die Gewindestange auf die Verstellung der Spannbacken in Abhängigkeit von der momentan gegebenen Drehzahl des Spannfutters ändert. Dies hat den Vorteil, dass eine vorgegebene Spannkraft mit nur geringfügigen Abweichungen über einen großen Drehzahlbereich aufrecht erhalten wird.

Insbesondere für deformationsempfindliche Werkstücke, wie zum Beispiel Lagerringe oder andere dünnwandige Werkstücke, die ein deformationsarmes Spannen erfordern, ist dies für eine schnellere Bearbeitung besonders vorteilhaft.

Bei der Werkzeugmaschine erfolgt zum Beispiel die Einwirkung durch ein Vorstellen und / oder ein Rückstellen der Gewindestange. Der Elektromotor kann seitlich neben dem Gehäuse angeordnet sein. Bevorzugt ist bei der Werkzeugmaschine der Elektromotor über einen Riementrieb mit dem Antriebsrad verbunden ist. Weiterhin kann die eine Außenverzahnung aufweisende Stahlbüchse über eine Klauenkupplung mit der Spindelmutter gekoppelt sein. Es ist bei der Werkzeugmaschine möglich, dass die Klauenkupplung mit einem Spiel versehen ist. Vorteilhafterweise ist die Spindelmutter zu einem Rollgewindetrieb erweitert. Bevorzugt ist ein Deckel des Gehäuses zum Anschluss an ein Gestell der Werkzeugmaschine vorgesehen.

Vorteilhafterweise ist bei der Werkzeugmaschine mindestens ein Sensor in einer Spannbacke angeordnet, wobei der Sensor zur Messung der effektiven fliehkraftabhängigen Spannkraft ausgestaltet ist. Dies hat den Vorteil, dass die Veränderungen der effektiven fliehkraftabhängigen Spannkraft in Abhängigkeit von der Drehzahl während der Bearbeitung gemessen und gegebenenfalls korrigiert werden können.

Das Verfahren für den Betrieb einer Werkzeugmaschine nach einem weiteren Gesichtspunkt der vorliegenden Erfindung weist bei einer Werkzeugmaschine mit einem Elektrospanner, der ein an der Arbeitsspindel der Werkzeugmaschine befestigbares Gehäuse, in dem axial verstellbar eine Gewindestange zur Einwirkung auf eine Verstellung der Spannbacken des Spannfutters gelagert ist, und einen elektrischen Stellmotor aufweist, dessen Rotor in Antriebsverbindung mit einem Antriebsrad steht, wobei das Antriebsrad mit einem Wellengenerator eines Gleitkeilgetriebes und ein Hohlrad des Gleitkeilgetriebes mit dem Gehäuse verbunden ist, und wobei eine eine Außenverzahnung aufweisende Stahlbüchse des Gleitkeilgetriebes als Antrieb für eine der Gewindestange zugeordnete Spindelmutter vorgesehen ist, einen Verfahrensschritt des Steuerns der Einwirkung über die Gewindestange auf die Verstellung der Spannbacken des Spannfutters in Abhängigkeit der momentan gegebenen Drehzahl des Spannfutters auf. Dieses Verfahren für den Betrieb der Werkzeugmaschine hat den Vorteil, dass eine vorgegebene Spannkraft auf die Werkstücke mit nur geringfügigen Abweichungen über einen großen Drehzahlbereich aufrecht erhalten wird.

Bevorzugt weist der Verfahrensschritt des Steuerns der Einwirkung über die Gewindestange auf die Verstellung der Spannbacken in Abhängigkeit der momentan gegebenen Drehzahl des Spannfutters auf: einen Verfahrensschritt des Auslesens aus einer Korrelationstabelle von mindestens einem Korrelationswert der Einwirkung für die vorgegebene Drehzahl des Spannfutters und einen Verfahrensschritt des Zuführens des mindestens einen Korrelationswertes der Einwirkung an eine Steuerung der Werkzeugmaschine auf. Die Verwendung einer Korrelationstabelle hat den Vorteil, dass auf einfache und schnelle Weise die erforderliche Einwirkung für die jeweilige Drehzahl bestimmt ist. Die Korrelationstabelle kann für jede Werkzeugmaschine jeweils einzeln bestimmt werden oder für alle Werkzeugmaschinen einer gleichen Modellreihe nur einmal bestimmt werden.

Vorteilhafterweise enthält bei dem Verfahren die Korrelationstabelle mindestens eine erste Untertabelle für ein Hochfahren der Drehzahl des Spannfutters und mindestens eine zweite Untertabelle für ein Runterfahren der Drehzahl des Spannfutters. Somit werden die Einflüsse der Reibung berücksichtigt, die einen unterschiedlichen Einfluss der Fliehkraft beim Rauffahren und beim Runterfahren der Drehzahl bewirken.

Bevorzugt werden bei dem Verfahren die erste Untertabelle und die zweite Untertabelle in Abhängigkeit von dem Spanndurchmesser und / oder dem zu bearbeitenden Material ausgewählt. Dies hat den Vorteil, dass in Abhängigkeit des Spanndurchmessers und / oder des zu bearbeitenden Materials das Verfahren hinsichtlich der erforderlichen Konstanz der effektiven fliehkraftabhängigen Spannkraft und einer beschleunigten Bearbeitung optimiert wird.

Besonders schnell ist das Verfahren für den Betrieb der Werkzeugmaschine durchführbar, wenn die Korrelationstabelle Korrelationswerte der Einwirkung über die Gewindestange auf die Verstellung der Spannbacken des Spannfutters für einen Abstand der Drehzahlen von 500

Umdrehungen/Minute (rpm) für einen Bereich der Drehzahlen von 0 bis 10.000 rpm aufweist. Hinsichtlich der Konstanz der effektiven fliehkraftabhängigen Spannkraft ist es für das Verfahren für den Betrieb der Werkzeugmaschine vorteilhaft, wenn für die Korrelationswerte der Abstand der Drehzahlen 100 rpm, vorzugsweise 20 rpm und insbesondere 10 rpm, und der Bereich der Drehzahlen 0 bis 8.000 rpm, vorzugsweise 0 bis 5000 rpm und insbesondere 0 bis 3600 rpm, beträgt.

Ein bevorzugtes Ausführungsbeispiel des Verfahrens für den Betrieb der Werkzeugmaschine weist einen Verfahrensschritt des Erfassens einer effektiven fliehkraftabhängigen Spannkraft mittels mindestens eines einer Spannbacke zugeordneten Sensors und einen Verfahrensschritt des Regelns der Einwirkung über die Gewindestange auf die Verstellung der Spannbacken des Spannfutters in Abhängigkeit von den Sensordaten auf. Somit werden die Veränderungen der effektiven fliehkraftabhängigen Spannkraft in Abhängigkeit von der Drehzahl während der Bearbeitung gemessen und gegebenenfalls korrigiert. Wenn zusätzlich auf eine Korrelationstabelle zurückgegriffen werden kann, hat dies den Vorteil, dass das Verfahren trotz eines möglichen Ausfalls des Sensors weiterbetrieben werden kann.

Weiterhin kann bei dem Verfahren für den Betrieb der Werkzeugmaschine der Anfangswert der Spannkraft auf die um das Regelungsintervall erhöhte erforderliche Spannkraft eingestellt werden.

Bei einem erfindungsgemäßen Bestimmungsverfahren einer Korrelationstabelle für das oben genannte Verfahren für den Betrieb der Werkzeugmaschine wird für mindestens eine Drehzahl des Spannfutters ein Korrelationswert der Einwirkung über die Gewindestange auf die Verstellung der Spannbacken des Spannfutters derart bestimmt, dass der Einfluss der Fliehkraft auf die Spannkraft für diese Drehzahl verringert wird. Somit wird die effektive fliehkraftabhängige Spannkraft über einen größeren Bereich der Drehzahl innerhalb der geforderten Konstanz gehalten.

Bevorzugt wird bei dem Bestimmungsverfahren für die Korrelationstabelle mindestens eine erste Untertabelle für ein Hochfahren der Drehzahl des Spannfutters und mindestens eine zweite Untertabelle für ein Runterfahren der Drehzahl des Spannfutters bestimmt. Somit können die beim Rauffahren und beim Runterfahren der Drehzahl unterschiedlichen Einflüsse der Reibung auf die effektive fliehkraftabhängige Spannkraft berücksichtigt werden. Weiterhin können die erste Untertabelle und die zweite Untertabelle in Abhängigkeit von dem Spanndurchmesser und / oder dem zu bearbeitenden Material bestimmt werden.

Bei einem Ausführungsbeispiel des Bestimmungsverfahrens werden die Korrelationswerte für einen Abstand der Drehzahlen von 500 rpm, vorzugsweise von 100 rpm und besonders von 20 rpm und insbesondere von 10 rpm, und einen Bereich der Drehzahlen von 0 bis 10000 rpm, vorzugsweise von 0 bis 8.000 rpm und besonders von 0 bis 5000 rpm und insbesondere von 0 bis 3600 rpm, bestimmt.

Ein weiterer Gesichtspunkt der vorliegenden Erfindung betrifft ein Speichermedium mit einer Korrelationstabelle, die nach einem der oben genannten Bestimmungsverfahren bestimmt wurde. Dies hat den Vorteil, dass zum Beispiel eine neue Korrelationstabelle, die auf andere Materialien der Werkstücke oder eine andere Bearbeitungsweise angepasst ist, einfach auf erfindungsgemäße Werkzeugmaschinen übertragen werden kann.

Ein zusätzlicher Gesichtspunkt der vorliegenden Erfindung betrifft ein Speichermedium mit einem Computerprogramm zur Durchführung eines der oben genannten Verfahren für den Betrieb einer Werkzeugmaschine. Somit können zum Einen erfindungsgemäße Werkzeugmaschinen verbessert werden und zum Anderen können auch herkömmliche Werkzeugmaschinen erfindungsgemäß umgerüstet werden.

Weiterhin betrifft die vorliegende Erfindung auch die Umrüstung herkömmlicher Werkzeugmaschinen. Es ist besonders vorteilhaft, dass durch eine Steuerung der Einwirkung über die Gewindestange auf die Verstellung der Spannbacken des Spannfutters in Abhängigkeit der momentan gegebenen Drehzahl des Spannfutters ein Fliehkraftausgleich erreicht werden kann.

Ein anderer Gesichtspunkt der vorliegenden Erfindung betrifft ein Speichermedium mit einem Computerprogramm zur Durchführung eines der oben genannten Bestimmungsverfahren der Korrelationstabelle. Dies hat den Vorteil, dass auf einfache Weise das Bestimmungsverfahren auf verschiedenen Werkzeugmaschinen eingesetzt werden kann.

Im Folgenden wird die Erfindung an einem in der Zeichnung dargestellten Ausführungsbeispiel näher erläutert; es zeigen:

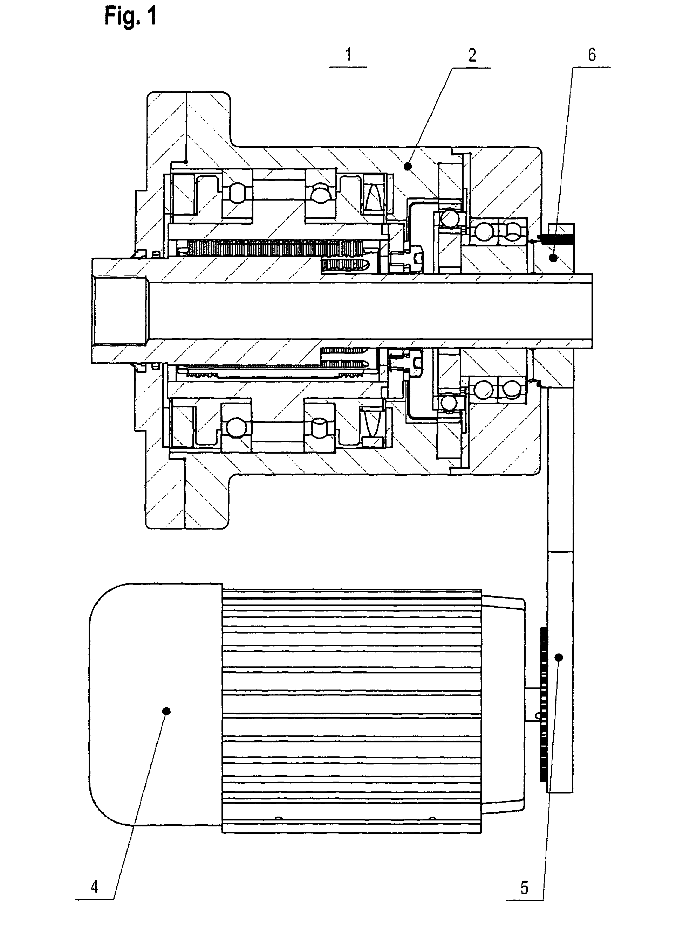

- Fig. 1: eine Seitenansicht einer Werkzeugmaschine nach einem Ausführungsbeispiel der vorliegenden Erfindung, teilweise im Schnitt dargestellt,

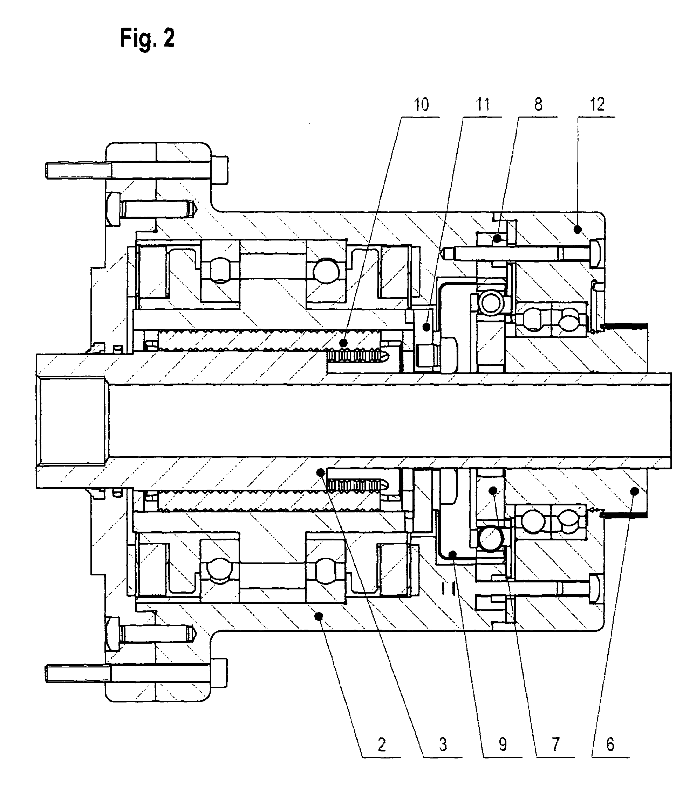

- Fig. 2: einen Längsschnitt der Werkzeugmaschine ohne Darstellung der Anbindung an den Stellmotor,
- Fig. 3: eine der Fig. 1 entsprechende Darstellung des an dem Gestell der Werkzeugmaschine angeschlossenen Gehäuses.

In der Zeichnung ist eine Werkzeugmaschine mit einem Elektrospanner 1 dargestellt, der dazu benutzt wird, die Spannbacken eines an der Werkzeugmaschine befestigten Spannfutters zu verstellen und auch bei hohen Drehzahlen des Spannfutters während des Spannvorganges dauerhaft sicher gegenüber dem Werkstück oder dem Werkzeug zu verstellen. Dazu ist der Elektrospanner 1 mit einem an der Arbeitsspindel der Werkzeugmaschine befestigten Gehäuse versehen, in dem axial verstellbar eine Gewindestange 3 zur Einwirkung auf die Verstellung der Spannbacken des Spannfutters gelagert ist. Weiterhin umfasst die Werkzeugmaschine einen elektrischen Stellmotor 4, der seitlich neben dem Gehäuse 2 angeordnet ist und der über einen Riementrieb 5 mit einem Antriebsrad 6 verbunden ist, das mit dem Rotor des Stellmotors 4 in Antriebsverbindung steht. Des Weiteren umfasst die Werkzeugmaschine eine Steuerung, die die Einwirkung über die Gewindestange 3 auf die Verstellung der Spannbacken in Abhängigkeit von der momentan gegebenen Drehzahl des Spannfutters ändert. Somit wird der gewünschte Bereich der Spannkraft über einen großen Bereich der Drehzahlen gesichert. Eine weitere besondere Praxistauglichkeit dieser Werkzeugmaschine ergibt sich dadurch, dass das Antriebsrad 6 mit dem Wellengenerator 7 eines Gleitkeilgetriebes und das Hohlrad 8 des Gleitkeilgetriebes mit dem Gehäuse verbunden ist, und dass die eine Außenverzahnung aufweisende Stahlbüchse 9 des Gleitkeilgetriebes als Antrieb für die Gewindestange 3 vorgesehen ist. Auf diese Weise sind die Änderungen der Einwirkung auf die Verstellung der Spannbacken in Abhängigkeit von der momentan gegebenen Drehzahl des Spannfutters besser durchführbar.

Bei dem in der Zeichnung dargestellten Ausführungsbeispiel ist die eine Außenverzahnung aufweisende Stahlbüchse 9 als Antrieb für die Gewindestange 6 über die Vermittlung eines Rollgewindetriebes 10 vorgesehen, das auch als ein Kugelgewindetrieb oder als eine Spindelmutter ausgestaltet sein kann. Die eine Außenverzahnung aufweisende Stahlbüchse 9 ist über eine ein Spiel aufweisende Klauenkupplung 11 mit dem Rollgewindetrieb 10 verbunden.

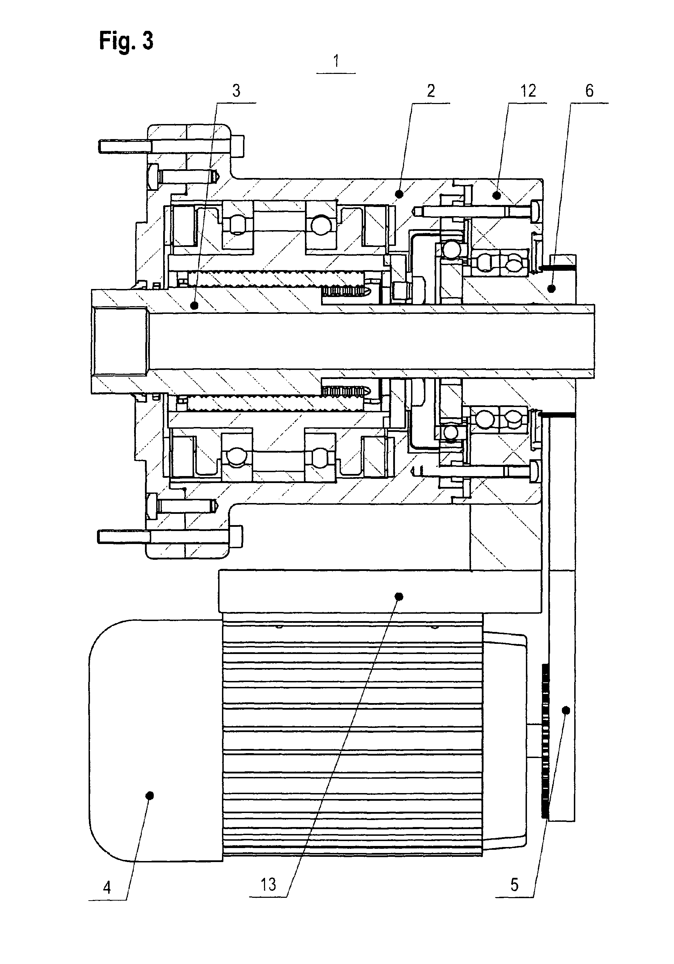

Fig. 3 zeigt ein Ausführungsbeispiel, bei dem der Deckel 12 des Gehäuses 2 an dem Gestell 13 der Werkzeugmaschine befestigt ist, so dass die Lagerung der Arbeitsspindel nicht durch die Anwesenheit des Stellmotors 4 beeinträchtigt wird.

Bevorzugt enthält die Werkzeugmaschine mindestens einen nicht dargestellten Sensor, der in mindestens einer Spannbacke angeordnet ist. Der nicht dargestellte Sensor ist zur Messung der effektiven fliehkraftabhängigen Spannkraft ausgestaltet.

Das Verfahren für den Betrieb der oben beschriebenen Werkzeugmaschine umfasst einen Verfahrensschritt des Steuerns der Einwirkung über die Gewindestange 3 auf die Verstellung der Spannbacken des Spannfutters in Abhängigkeit der momentan gegebenen Drehzahl des Spannfutters.

Der Verfahrensschritt des Veränderns der Einwirkung mit der Drehzahl des Spannfutters kann einen Verfahrensschritt des Auslesens aus einer Korrelationstabelle von mindestens einem Korrelationswert der Einwirkung für die vorgegebene Drehzahl des Spannfutters und einen Verfahrensschritt des Zuführens des mindestens einen Korrelationswertes der Einwirkung an die Steuerung aufweisen.

Weiterhin kann der Verfahrensschritt des Veränderns der Einwirkung über die Gewindestange 3 auf die Verstellung der Spannbacken mit der Drehzahl des Spannfutters einen Verfahrensschritt des Auslesens aus einer Korrelationstabelle von mindestens einem Korrelationswert der Einwirkung für die vorgegebene Drehzahl des Spannfutters und einen Verfahrensschritt des Zuführens des mindestens einen Korrelationswertes der Einwirkung an die Steuerung aufweisen.

Bevorzugt weist die Korrelationstabelle mindestens eine erste Untertabelle für ein Hochfahren der Drehzahl des Spannfutters und mindestens eine zweite Untertabelle für ein Runterfahren der Drehzahl des Spannfutters auf. Die erste Untertabelle und die zweite Untertabelle können in Abhängigkeit von dem Spanndurchmesser und/oder dem zu bearbeitenden Material ausgewählt werden.

Bei der Korrelationstabelle können die Korrelationswerte der Einwirkung für einen Abstand der Drehzahlen von 500 rpm für einen Bereich der Drehzahlen von 0 bis 10.000 rpm bestimmt sein. Weiterhin können bei dem Verfahren für den Betrieb einer Werkzeugmaschine die Korrelationswerte für einen Abstand der Drehzahlen von 100 rpm, vorzugsweise 20 von rpm und insbesondere von 10 rpm, und für einen Bereich der Drehzahlen von 0 bis 8.000 rpm, vorzugsweise von 0 bis 5000 rpm und insbesondere von 0 bis 3600 rpm, bestimmt sein.

Vorteilhafterweise umfasst das Verfahren für den Betrieb einer Werkzeugmaschine einen Verfahrensschritt des Erfassens einer effektiven fliehkraftabhängigen Spannkraft mittels mindestens eines einer Spannbacke zugeordneten, nicht dargestellten Sensors und einen Verfahrensschritt des Regelns der Einwirkung über die Gewindestange 3 auf die Verstellung der Spannbacken in Abhängigkeit von den Sensordaten.

Bevorzugt wird bei dem Verfahren für den Betrieb einer Werkzeugmaschine der Anfangswert der Spannkraft auf die um das Regelungsintervall erhöhte erforderliche Spannkraft eingestellt.

Nach einem weiteren Gesichtspunkt der vorliegenden Erfindung weist ein Speichermedium ein Computerprogramm zur Durchführung eines der oben genannten Verfahren für den Betrieb einer Werkzeugmaschine auf.

Bei einem Bestimmungsverfahren einer Korrelationstabelle für einen Fliehkraftausgleich bei einer Werkzeugmaschine nach einem Ausführungsbeispiel der vorliegenden Erfindung wird ein Korrelationswert der Einwirkung über die Gewindestange 3 auf die Verstellung der Spannbacken in Abhängigkeit von der momentan gegebenen Drehzahl des Spannfutters derart bestimmt, dass der Einfluss der Fliehkraft auf die Spannkraft für diese Drehzahl verringert werden kann.

Bei einem bevorzugten Ausführungsbeispiel weist die Korrelationstabelle mindestens eine erste Untertabelle für ein Hochfahren der Drehzahl des Spannfutters und mindestens eine zweite Untertabelle für ein Runterfahren der Drehzahl des Spannfutters auf. Weiterhin können bei dem Bestimmungsverfahren die Korrelationswerte für einen Abstand der Drehzahlen von 500 rpm, vorzugsweise von 100 rpm und besonders von 20 rpm und insbesondere von 10 rpm, und einen Bereich der Drehzahlen von 0 bis 10000 rpm, vorzugsweise von 0 bis 8.000 rpm und besonders von 0 bis 5000 rpm und insbesondere von 0 bis 3600 rpm, bestimmt werden.

Nach einem anderen Gesichtspunkt der vorliegenden Erfindung weist ein Speichermedium ein Computerprogramm zur Durchführung eines der oben genannten Bestimmungsverfahren der Korrelationstabelle auf. Weiterhin weist nach einem weiteren Gesichtspunkt der vorliegenden Erfindung ein Speichermedium eine der Korrelationstabellen auf, die nach einem der oben genannten Bestimmungsverfahren bestimmt wurden.

Die vorliegende Erfindung betrifft auch die Umrüstung einer einen Elektrospanner 1 aufweisenden Werkzeugmaschine auf eine Werkzeugmaschine mit einer entsprechenden Steuerung, die die Einwirkung über die Gewindestange 3 auf die Verstellung der Spannbacken in Abhängigkeit von der momentan gegebenen Drehzahl des Spannfutters ändert.

## Patentansprüche

1. Werkzeugmaschine mit einem Elektrospanner (1), der ein an der Arbeitsspindel der Werkzeugmaschine befestigbares Gehäuse (2), in dem axial verstellbar eine Gewindestange (3) zur Einwirkung auf eine Verstellung der Spannbacken des Spannfutters gelagert ist, und einen elektrischen Stellmotor (4) aufweist, dessen Rotor in Antriebsverbindung mit einem Antriebsrad (6) steht, **dadurch gekennzeichnet, dass** das Antriebsrad (6) mit einem Wellengenerator (7) eines Gleitkeilgetriebes und ein Hohlrad (8) des Gleitkeilgetriebes mit dem Gehäuse (2) verbunden ist, dass eine eine Außenverzahnung aufweisende Stahlbüchse (9) des Gleitkeilgetriebes als Antrieb für eine der Gewindestange (3) zugeordnete Spindelmutter vorgesehen ist, und dass die Werkzeugmaschine eine Steuerung aufweist, die die Einwirkung über die Gewindestange (3) auf die Verstellung der Spannbacken in Abhängigkeit von der momentan gegebenen Drehzahl des Spannfutters ändert.

2. Werkzeugmaschine nach Anspruch 2, **dadurch gekennzeichnet, dass** die Einwirkung durch ein Vorstellen und / oder ein Rückstellen der Gewindestange (3) erfolgt.

3. Werkzeugmaschine nach Anspruch 1 oder 2, **gekennzeichnet durch** mindestens einen Sensor, der in mindestens einer Spannbacke angeordnet ist und der zur Messung der effektiven fliehkraftabhängigen Spannkraft ausgestaltet ist.

4. Verfahren für den Betrieb einer Werkzeugmaschine mit einem Elektrospanner (1), der ein an der Arbeitsspindel der Werkzeugmaschine befestigbares Gehäuse (2), in dem axial verstellbar eine Gewindestange (3) zur Einwirkung auf eine Verstellung der Spannbacken des Spannfutters gelagert ist, und einen elektrischen Stellmotor (4) aufweist, dessen Rotor in Antriebsverbindung mit einem Antriebsrad (6) steht, wobei das Antriebsrad (6) mit einem Wellengenerator (7) eines Gleitkeilgetriebes und ein Hohlrad (8) des Gleitkeilgetriebes mit dem Gehäuse (2) verbunden ist, und wobei eine eine Außenverzahnung aufweisende Stahlbüchse (9) des Gleitkeilgetriebes als Antrieb für eine der Gewindestange (3) zugeordnete Spindelmutter vorgesehen ist, **gekennzeichnet durch** einen Verfahrensschritt des Steuerns der Einwirkung über die Gewindestange (3) auf die Verstellung der Spannbacken des Spannfutters in Abhängigkeit der momentan gegebenen Drehzahl des Spannfutters.

5. Verfahren nach Anspruch 4, **dadurch gekennzeichnet, dass** der Verfahrensschritt des Steuerns der Einwirkung einen Verfahrensschritt des Auslesens aus einer Korrelationstabelle von mindestens einem Korrelationswert der Einwirkung für die vorgegebene Drehzahl des Spannfutters und einen Verfahrensschritt des Zuführens des mindestens einen Korrelationswertes der Einwirkung an eine Steuerung der Werkzeugmaschine aufweist.

6. Verfahren nach Anspruch 5, **dadurch gekennzeichnet, dass** die Korrelationstabelle mindestens eine erste Untertabelle für ein Hochfahren der Drehzahl des Spannfutters und mindestens eine zweite Untertabelle für ein Runterfahren der Drehzahl des Spannfutters aufweist.

7. Verfahren nach Anspruch 6, **gekennzeichnet dadurch, dass** die erste Untertabelle und die zweite Untertabelle in Abhängigkeit von dem Spanndurchmesser und/oder dem zu bearbeitenden Material ausgewählt werden.

8. Verfahren nach einem der Ansprüche 5 oder 6, **dadurch gekennzeichnet, dass** die Korrelationstabelle Korrelationswerte der Einwirkung für einen Abstand der Drehzahlen von 500 rpm für einen Bereich der Drehzahlen von 0 bis 10.000 rpm aufweist.

9. Verfahren nach Anspruch 8, **dadurch gekennzeichnet, dass** für die Korrelationswerte der Abstand der Drehzahlen 100 rpm, vorzugsweise 20 rpm und insbesondere 10 rpm, und der Bereich der Drehzahlen 0 bis 8.000 rpm, vorzugsweise 0 bis 5000 rpm und insbesondere 0 bis 3600 rpm, beträgt.

10. Verfahren nach einem der Ansprüche 4 bis 9, **gekennzeichnet durch** einen Verfahrensschritt des Erfassens einer effektiven fliehkraftabhängigen Spannkraft mittels mindestens eines einer Spannbacke zugeordneten Sensors und einen Verfahrensschritt des Regelns der Einwirkung über die Gewindestange (3) auf die Verstellung der Spannbacken des Spannfutters in Abhängigkeit von den Sensordaten.

11. Verfahren nach einem Ansprüche 4 bis 10, **dadurch gekennzeichnet, dass** der Anfangswert der Spannkraft auf die um das Regelungsintervall erhöhte erforderliche Spannkraft eingestellt wird.

12. Bestimmungsverfahren einer Korrelationstabelle für einen Fliehkraftausgleich bei einer Werkzeugmaschine nach einem der Ansprüche 1 bis 3, **dadurch gekennzeichnet, dass** für mindestens eine Drehzahl des Spannfutters ein Korrelationswert des Spanndruckes derart bestimmt wird, dass der Einfluss der Fliehkraft auf die Spannkraft für diese Drehzahl verringert wird.

13. Bestimmungsverfahren nach Anspruch 12, **dadurch gekennzeichnet, dass** für die Korrelationstabelle mindestens eine erste Untertabelle für ein Hochfahren der Drehzahl des Spannfutters und mindestens eine zweite Untertabelle für ein Runterfahren der Drehzahl des Spannfutters bestimmt werden.

14. Bestimmungsverfahren nach Anspruch 12 oder 13, **dadurch gekennzeichnet, dass** die Korrelationswerte für einen Abstand der Drehzahlen von 500 rpm, vorzugsweise von 100 rpm und besonders von 20 rpm und insbesondere von 10 rpm, und für einen Bereich der Drehzahlen von 0 bis 10000 rpm, vorzugsweise von 0 bis 8.000 rpm und besonders von 0 bis 5000 rpm und insbesondere von 0 bis 3600 rpm, bestimmt werden.

15. Bestimmungsverfahren nach einem der Ansprüche 12 bis 14, **dadurch gekennzeichnet, dass** die Korrelationswerte der Einwirkung in Abhängigkeit von dem Spanndurchmesser und / dem zu bearbeitenden Materialien bestimmt werden.

16. Speichermedium mit einem Computerprogramm zur Durchführung eines Verfahrens für den Betrieb einer Werkzeugmaschine nach einem der Ansprüche 4 bis 11.

17. Speichermedium mit einer Korrelationstabelle, die nach einem Bestimmungsverfahren der Ansprüche 12 bis 15 bestimmt wurde.

18. Speichermedium mit einem Computerprogramm zur Durchführung eines Bestimmungsverfahrens der Korrelationstabelle nach einem der Ansprüche 12 bis 15.
